# FASCICULE DE BREVET EUROPEEN

(11) **EP 3 517 885 B1**
(45) Date de publication et mention de la délivrance du brevet: **08.07.2020**
(21) Numéro de dépôt: 18213056.7
(22) Date de dépôt: 17.12.2018
(51) Int. Cl.: G01B 5/02, G01B 5/06, F16B 5/02

(54) **OUTIL ET METHODE DE CONTROLE DE LA QUALITE D'ASSEMBLAGES D'ELEMENTS STRUCTURAUX D'AERONEFS**
WERKZEUG UND KONTROLLMETHODE DER QUALITÄT DES ZUSAMMENBAUS VON STRUKTURELEMENTEN VON LUFTFAHRZEUGEN
TOOL AND METHOD FOR MONITORING THE QUALITY OF ASSEMBLIES OF STRUCTURAL ELEMENTS OF AIRCRAFT

(30) Priorité: 30.01.2018 FR 1850747
(43) Date de publication de la demande: 31.07.2019
(73) Titulaire: Airbus Operations S.A.S., 31060 Toulouse (FR)
(72) Inventeur: MARTRES, Jean-Luc, 31790 SAINT-JORY (FR)
(74) Mandataire: Gicquel, Olivier Yves Gérard

(56) Documents cités:
- EP-A1- 0 228 563
- DE-A1-102015 226 225
- US-A- 5 777 246
- US-B1- 9 057 593
- US-B2- 8 594 822

## Description

L'invention concerne un outil et une méthode de contrôle de la qualité d'assemblages d'éléments structuraux d'aéronefs au moyen d'ensembles de fixation de type vis-écrou.

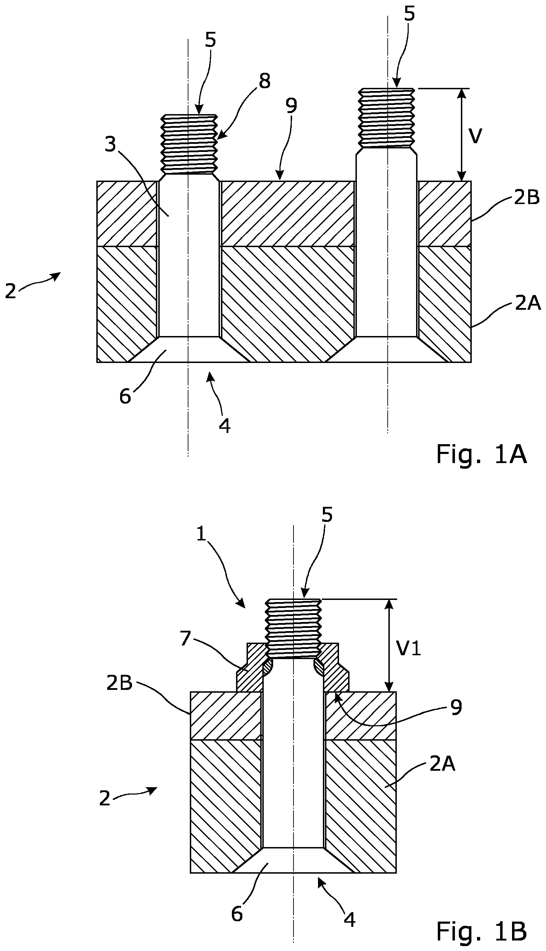

En relation avec les figures 1A et 1B, un assemblage 2 d'au moins deux éléments structuraux 2A,2B (par exemple des plaques) comprend un ensemble de fixation vis-écrou 1 pour fixer les deux éléments structuraux l'un à l'autre. Pour chaque ensemble vis-écrou 1 d'un assemblage, la tige 3 d'une vis filetée 4 est introduite par son extrémité libre 5 au travers d'orifices respectifs coaxiaux arrangés dans les éléments structuraux 2A, 2B jusqu'à ce que la tête 6 de la vis prenne appui sur un premier élément structurel 2A. L'écrou 7 est ensuite vissé sur une portion filetée 8 de la vis et serré jusqu'à prendre appui sur une face , dite face de contact 9, d'un second élément structurel 2B.

Un assemblage 2 présente une qualité correcte lorsque plusieurs conditions sont remplies :
- le matage doit être intégral (voir figure 1A), ce qui signifie que les éléments structuraux assemblés 2A et 2B doivent être entièrement traversées par le fût 3 de la vis 4 et que ce dernier doit être en contact complet avec les éléments traversés. Cette condition contribue à la tenue au cisaillement de l'assemblage 2. Cette première condition impose une valeur minimale, dépendante des caractéristiques de la vis (hauteur de la portion fileté), appelée distance de matage et notée D_{matage}, pour une première distance V correspondant à la distance sur laquelle la vis dépasse des éléments structuraux assemblés 2A, 2B. La distance V est donc la distance mesurée, selon l'axe longitudinal de la vis 4, entre l'extrémité libre 5 et la face d'appui 9. La première condition s'écrit : V > D_{matage}.
- le serrage complet de l'écrou 7 sur la vis 4 doit être garanti afin d'assurer un serrage adéquat des éléments structuraux 2A, 2B les uns aux autres. A l'inverse du matage intégral, cette seconde condition impose que l'écrou 7 soit vissé sur une majorité de la hauteur de la portion filetée 8 de la vis 4. Plus exactement, cette seconde condition limite la distance sur laquelle l'extrémité libre 5 dépasse de l'écrou 7. Cette seconde condition définit donc une valeur maximale, notée D_{écrou}, pour une seconde distance V1 mesurée selon l'axe longitudinal de la vis 4 entre l'extrémité libre 5 de la vis et l'extrémité de l'écrou au contact avec la face de contact 9. La deuxième condition s'écrit : V1 < D_{écrou}. On notera que la valeur D_{écrou} est dépendante des dimensions de la vis 4 (hauteur de la portion filetée), de l'écrou 7 (présence d'un chambrage ou non), ainsi que les dimensions (notamment épaisseurs) des éléments structuraux 2A, 2B traversés par la vis 4.

Pour vérifier la qualité d'un assemblage d'éléments structuraux d'aéronefs au moyen d'un ensemble de fixation de type vis-écrou, un opérateur vérifiera la conformité des distances V et V1. Il existe plusieurs moyens à cet effet.

Un opérateur peut notamment utiliser des calibres métalliques, d'utilisation simple et rapide. Il existe deux types de calibres : les calibres en forme de T, dans lesquels la hauteur entre la base du T et l'un des bras du T fournit la valeur D_{matage} et la hauteur entre la base du T et l'autre bras du T fournit la valeur D_{écrou}, et les calibres en escalier, dans lesquels la hauteur entre la base du calibre et la première marche d'escalier fournit la valeur D_{matage} et la hauteur entre la base du calibre et la seconde marche d'escalier fournit la valeur D_{écrou}.

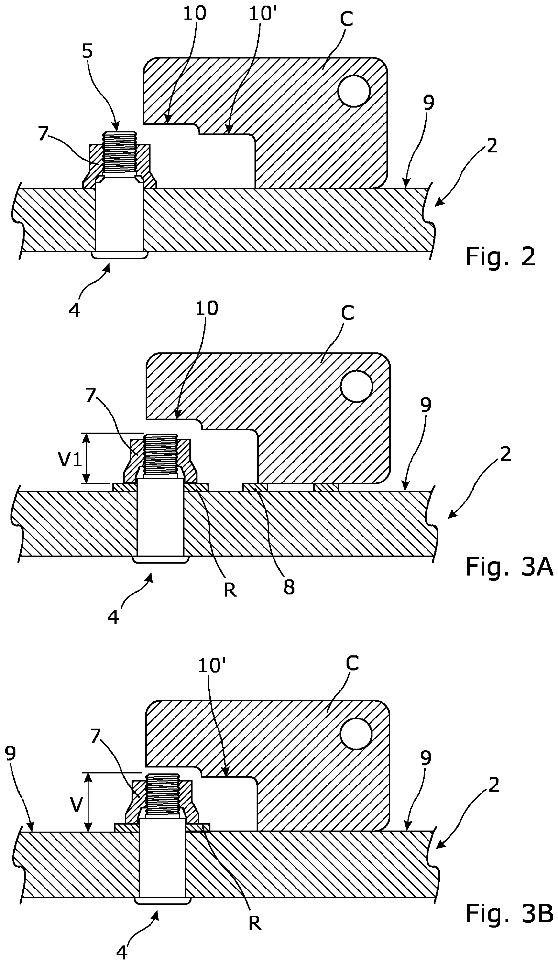

Les valeurs D_{matage} et D_{écrou} dépendent de la vis et de l'écrou utilisés. La diversité des vis et écrous existant dans le domaine de l'aéronautique et des associations possibles entre les divers écrous et vis existants a conduit à la définition de plusieurs centaines de calibres différents. Une difficulté supplémentaire provient du fait qu'il est possible d'ajouter une rondelle entre l'écrou et les éléments structuraux à assembler. Compte tenu de la présence ou non d'une rondelle et de l'existence de deux types de calibre (en T ou en escalier), il existe trois méthodes de contrôle avec les calibres métalliques. Ces méthodes sont illustrées sur les figures 2 à 4 annexées.

La figure 2 illustre la méthode de contrôle utilisant un calibre métallique en escalier dans le cas d'un assemblage avec un ensemble de fixation vis-écrou sans rondelle. L'assemblage 2 est de qualité correcte si, cumulativement, V est supérieure à D_{matage} c'est-à-dire si le bord 10 (première marche de l'escalier) du calibre C ne peut pas passer au-dessus de l'extrémité filetée 5 de la vis avec le calibre C en appui sur la face de contact 9, et si V est inférieure à D_{écrou}, c'est-à-dire si le bord 10' (deuxième marche de l'escalier) du calibre est au-dessus de l'extrémité filetée 5 de la vis avec le calibre en appui sur la face de contact 9.
Les figures 3A et 3B illustrent la méthode de contrôle utilisant un calibre métallique en escalier dans le cas d'un assemblage avec un ensemble de fixation vis-écrou avec rondelle. L'assemblage 2 est de qualité correcte si, cumulativement, V1 est inférieure à D_{écrou} (figure 3A) c'est-à-dire si le bord 10 du calibre C est au-dessus de l'extrémité filetée 5 de la vis avec le calibre C en appui sur la rondelle R, et si V est supérieure à D_{matage} (figure 3B) c'est-à-dire si le bord 10' du calibre ne peut pas passer au-dessus de l'extrémité filetée 5 de la vis avec le calibre en appui sur la face de contact 9.

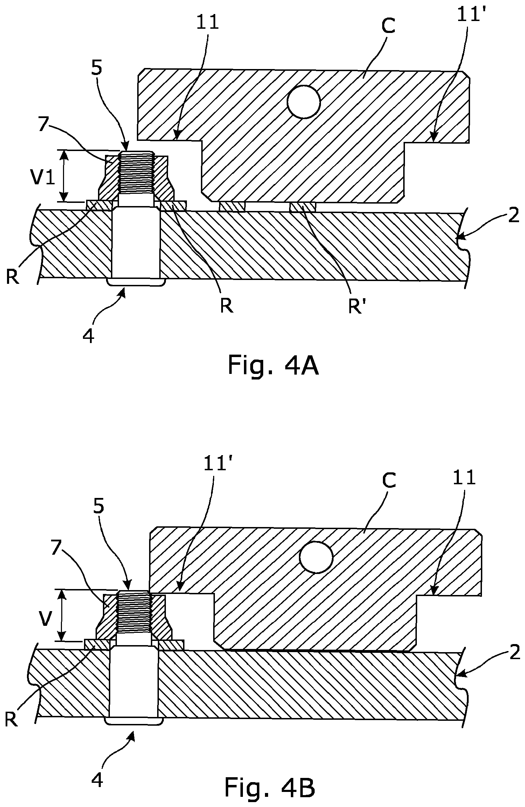

Les figures 4A et 4B illustrent la méthode de contrôle utilisant un calibre métallique en T dans le cas d'un assemblage avec un ensemble de fixation vis-écrou avec rondelle. L'assemblage 2 est de qualité correcte si, cumulativement, V1 est inférieure à D_{écrou} avec le calibre C en appui sur la rondelle R (figure 4A), D_{écrou} étant matérialisé par le bord 11 du calibre et si V est supérieure à D_{matage} avec le calibre C en appui sur la face de contact 9 (figure 4B), D_{matage} étant matérialisé par le bord 11' du calibre.

Le document US9057593 décrit un autre moyen pour vérifier la conformité des distances V et V1. En effet, ce document décrit un outil comprenant un dispositif mécanique et un dispositif électronique. Le dispositif mécanique comprend un boîtier comportant une surface d'appui configurée pour être plaquée contre la face de contact 9 de l'assemblage, une potence montée mobile en translation à l'intérieur du boîtier et comportant une face inférieure configuré pour être plaquée contre l'extrémité libre 5 de la vis. Un codeur linéaire mesure en utilisation une distance entre la surface d'appui et la face inférieure de la potence mobile afin de vérifier rapidement la conformité des distances V et V1. En fonction du résultat des vérifications effectuées, le dispositif électronique fournit une lecture rapide, via des moyens de visualisation, de la qualité de l'assemblage. L'outil de contrôle décrit dans le document US9057593 est efficace, mais il n'est adapté qu'à des assemblages de caractéristiques semblables, et de ce fait, il faut plusieurs outils de contrôle possédant des dimensions différentes afin de pouvoir contrôler la qualité de tous les assemblages d'éléments structuraux 2 d'un aéronef.

On comprend aisément qu'avec de tels moyens de vérification, un opérateur devant contrôler la qualité d'une multitude d'assemblages ayant des caractéristiques différentes aura besoin d'un temps non négligeable pour aller chercher le bon calibre ou le bon dispositif mécanique adapté aux caractéristiques des assemblages.

L'invention vise à pallier ces inconvénients en fournissant un outil de contrôle de la qualité des assemblages d'éléments structuraux d'aéronefs au moyen d'ensembles de fixation de type vis-écrou tel que revendiqué dans la revendication 1.
L'invention facilite la tâche des opérateurs en ce sens que ces derniers disposent d'un seul outil avec une unique méthode d'utilisation quelles que soient les caractéristiques de l'assemblage à contrôler.
D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
- la figure 1A et 1B sont des coupes axiales d'assemblages d'éléments structuraux d'aéronefs au moyen d'ensembles de fixation de type vis-écrou ;
- la figure 2 à 4, déjà décrites, illustrent différentes méthodes de contrôle de la qualité des assemblages d'éléments structuraux d'aéronefs en utilisant des calibres ;
- la figure 5 est une vue en perspective d'un outil de contrôle de la qualité des assemblages d'éléments structuraux d'aéronefs au moyen d'ensembles de fixation de type vis-écrou selon un premier mode de réalisation de l'invention ;
- la figure 6A est une vue en perspective d'un outil de contrôle selon un second mode de réalisation l'invention ;
- la figure 6B est une vue en coupe axiale de l'outil mécanique de la figure 6A ;
- la figure 7A est une vue en perspective d'un outil de contrôle selon un troisième mode de réalisation de l'invention ;
- la figure 7B est une vue en coupe axiale de l'outil de la figure 7A ;

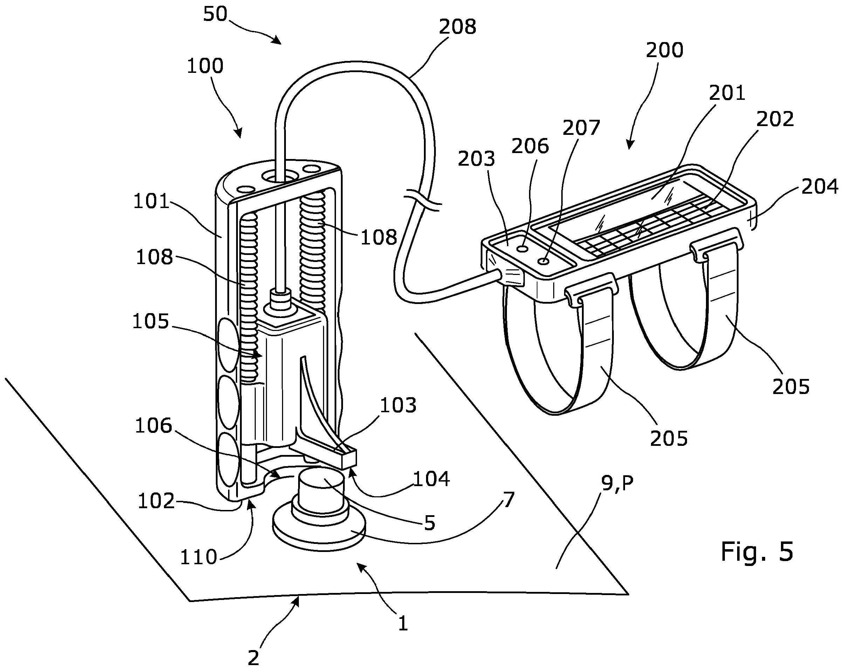

En référence avec la figure 5, un outil de contrôle 50 de la qualité d'assemblages d'éléments structuraux d'aéronefs 2 au moyen d'ensembles de fixation de type vis-écrou 1 comprend d'une part un dispositif mécanique 100 et d'autre part un dispositif électronique 200 connecté au dispositif mécanique 100.

Le dispositif mécanique 100 comprend un boîtier de protection 101 ayant une face inférieure 102 formant une surface d'appui 110 plane qui définit un plan de référence P et est destinée, en utilisation de l'outil 50, à être plaquée contre la face de contact 9 de l'assemblage 2 sur laquelle l'écrou 7 de l'ensemble de fixation 1 prend appui. La face inférieure 102 présente une encoche 106 semi-circulaire pour permettre de placer l'outil 50 à proximité immédiate d'un assemblage 2 à contrôler, afin d'entourer partiellement l'écrou 7 de l'ensemble de fixation 1.

Le dispositif mécanique 100 intègre un codeur linéaire 105 associé à une potence mobile 103. Dans l'exemple de la figure 2, le codeur linéaire 105 est monté à l'intérieur du boîtier 101 et la potence comprend une portion dépassant du boîtier. La potence 103 est mobile en translation selon un axe perpendiculaire (hauteur du boitier) à la face inférieure 102. La potence 103 est rappelée automatiquement en position de repos, c'est-à-dire vers une extrémité du boitier distale de la face inférieure 102, par des éléments élastiques 108 du type ressort.

La potence mobile 103 présente une surface plane 104, arrangé sur la portion dépassant du boitier 101, et destinée en utilisation de l'outil 50, à être plaquée contre l'extrémité libre 5 de la vis de l'ensemble de fixation 1.

Le codeur linéaire 105 est configuré pour fournir une mesure de la distance entre la face inférieure 104 de la portion de la potence 103 dépassant du boîtier 101 et le plan de référence P (surface d'appui 110).

Le codeur linéaire 105 est relié, à l'aide d'un câble 208, au dispositif électronique 200. En variante non représentée sur les figures, la communication entre le codeur linéaire 105 et le dispositif électronique 200 est assurée par des moyens d'émission/réception sans fil.

Le dispositif électronique 200 comprend une unité centrale (non représentée), un écran d'affichage 201 et une interface homme-machine 202, par exemple un clavier. De préférence, le dispositif électronique comprend des moyens de visualisation comme par exemple, deux voyants lumineux 206, 207, respectivement vert et rouge.

Dans l'exemple illustré, l'outil 50 comprend une coque 204 adaptée pour recevoir, porter et protéger les composants du dispositif électronique 200. La coque 204 comprend des sangles 205 permettant de l'attacher sur l'avant-bras d'un opérateur.

De manière classique, l'unité centrale comprend un processeur et des mémoires. L'unité centrale met en œuvre un système d'exploitation, enregistré dans les mémoires, qui, de manière connue, permet à un opérateur de l'outil 50 d'interagir, via l'interface homme machine 202, avec l'unité centrale pouvant commander l'affiche d'informations à destination de l'utilisateur sur l'écran d'affichage 201.

L'opérateur peut démarrer un programme, exécuté par l'unité centrale, permettant de mettre en œuvre une méthode pour contrôler la qualité d'un assemblage d'éléments structuraux d'un aéronef au moyen de l'outil 50. Les instructions de ce programme sont enregistrées dans les mémoires de l'unité centrale.

Selon l'invention, les instructions de ce programme font appel à une base de données enregistrée dans les mémoires et dans laquelle sont enregistrées les caractéristiques de chacun de la pluralité des différents d'assemblages 2 d'éléments structuraux existants dans l'aéronef.

Les caractéristiques d'un assemblage sont les dimensions et références de la vis 4 et de l'écrou 7, l'épaisseur totale (traversée par la vis) des éléments structuraux assemblés, les dimensions et références de la rondelle si l'assemblage en contient, les valeurs de D_{matage} et D_{écrou} préconisées pour la combinaison vis-écrou de l'ensemble de fixation dans le cas où l'ensemble de fixation ne comprend pas de rondelle, les valeurs de D_{matage} et D_{écrou} préconisées dans le cas où l'ensemble de fixation comprend une rondelle, optionnellement la zone de l'aéronef dans laquelle ou lesquelles cet assemblage se situe,

Les zones de l'aéronef sont définies arbitrairement par les concepteurs du programme en fonction de l'épaisseur totale des éléments structuraux traversés par la vis de l'ensemble de fixation de type vis-écrou 1 au moyen duquel les éléments structuraux de l'assemblage sont assemblés. Les opérateurs de l'outil connaissent la répartition des zones dans l'aéronef et sont ainsi capables, lorsqu'ils sont à l'intérieur d'un aéronef, de définir la zone de l'aéronef dans laquelle l'assemblage à contrôler se situe.

Lorsque un opérateur lance, via l'interface homme-machine, le programme pour mettre en œuvre la méthode de contrôle de la qualité d'un assemblage d'éléments structuraux, les étapes successives suivantes sont mises en œuvre.

Dans une étape E1 d'identification, l'opérateur identifie assemblage d'éléments structuraux qu'il veut contrôler. A cet effet, l'unité centrale déclenche l'ouverture d'une fenêtre de saisie sur l'écran d'affichage 201 et l'opérateur, via l'interface homme machine 202 est guidé pour rentrer des paramètres relatifs aux caractéristiques dudit assemblage. A cet effet, il est demandé à l'opérateur d'indiquer comme paramètres une dimension ou une référence de la vis et de l'écrou de l'ensemble de fixation 1 de l'assemblage, la présence ou nom d'une rondelle et, dans l'affirmative, la dimension ou référence de la rondelle, éventuellement la zone de l'aéronef dans laquelle l'assemblage se situe.

Dans une étape E2 de détermination, l'unité centrale détermine, en fonction des paramètres rentrés par l'opérateur, les valeurs de D_{matage} et D_{écrou} préconisées pour l'assemblage dont l'opérateur veut contrôler la qualité. Dans le détail, l'unité centrale cherche une correspondance dans la base de données DB entre les paramètres rentrés par l'opérateur et un assemblage enregistré dans la base et continuera à demander des paramètres à l'opérateur tant qu'un unique assemblage n'aura pas été déterminé.

Dans une étape E3 de positionnement, mise en œuvre après que l'opérateur a reçu des instructions via l'affichage d'une fenêtre sur l'écran d'affichage 201 pour lui demander de procéder à une mesure au moyen du dispositif mécanique 100, l'opérateur place le dispositif mécanique 100 de sorte à enserrer l'écrou 7 avec la surface d'appui 110 du dispositif mécanique 100 plaquée contre la face de contact 9 et la surface plane 104 de la potence 103 plaquée contre l'extrémité libre 5 de la vis.

De préférence, l'unité centrale commande l'écran d'affichage 201 pour afficher des indications relatives à la façon de positionner l'outil 50 pour effectuer cette mesure.

Dans une étape E4 de mesure, le codeur linéaire 105 mesure la distance entre la face inférieure 104 de la potence et le plan de référence P (surface d'appui 110) et fournit cette mesure à l'unité centrale.

Ensuite, dans une première étape E5 de comparaison, l'unité centrale compare la mesure avec une première plage de validité délimitée (borne maximum) par la valeur de D_{matage}, relative au matage de l'assemblage, déterminée à l'étape E2 de détermination et mémorisée dans la base de données.

Dans une second étape E6 de comparaison, l'unité centrale compare la mesure avec une seconde plage de validité délimitée (borne minimum) par la valeur de D_{écrou}, relative au serrage complet de l'écrou 7 sur la vis 4, déterminée à l'étape de détermination E2 et mémorisée dans la base de données.

Suite aux deux étapes de comparaison E5 et E6, et dans une étape E7 de détermination de la qualité de l'assemblage, l'unité centrale détermine que la qualité de l'assemblage d'éléments structuraux 2 est correcte si cumulativement la mesure est comprise dans la première plage de validité et dans la deuxième plage de validité ou au contraire que la qualité de l'assemblage est incorrecte si la mesure est en dehors d'au moins l'une des deux plages de validité.

Dans le cas où la qualité de l'assemblage est incorrecte, le voyant lumineux rouge 207 s'allume. Il peut être prévu que ce voyant rouge clignote ou qu'il soit associé à une alarme sonore pour attirer plus encore l'attention de l'utilisateur. L'opérateur constatant cet état déposera l'ensemble de fixation 1 qui sera réalisé à nouveau afin d'obtenir un assemblage 2 avec une qualité correcte.

Optionnellement, l'unité centrale indique à l'opérateur via l'écran d'affichage 201 en quoi la qualité de l'assemblage est incorrecte ainsi que les démarches à effectuer pour résoudre le défaut.

Au contraire, si la qualité de l'assemblage est correcte, le voyant vert 206 s'allume et l'opérateur pourra procéder au contrôle d'un autre assemblage.

De préférence, l'unité centrale enregistre des informations relatives au contrôle de la qualité effectué dans une des mémoires aux fins de traçabilité des contrôles effectués.

Afin de gagner du temps, et si l'opérateur doit vérifier plusieurs assemblages, à la fin de l'étape E7 de détermination de la qualité d'un premier assemblage, l'unité centrale déclenche l'affichage d'une fenêtre sur l'écran d'affichage 201 pour demander à l'opérateur s'il veut procéder :
a) au contrôle de la qualité d'un second assemblage de même caractéristiques que celui déjà contrôlé :
b) au contrôle de la qualité d'un second assemblage de caractéristiques différentes que celui déjà contrôlé.

Dans le cas a), la méthode de contrôle de la qualité d'un assemblage d'éléments structuraux d'aéronefs reprendra à l'étape de positionnement E3, mise en œuvre après que l'opérateur a reçu des instructions via l'affichage d'une fenêtre sur l'écran d'affichage 201 pour lui demander de procéder à une mesure au moyen du dispositif mécanique 100.

Dans le cas b), la méthode de contrôle de la qualité d'un assemblage d'éléments structuraux d'aéronefs au moyen d'un ensemble de fixation de type vis-écrou reprendra à l'étape d'identification E1 afin d'identifier le nouvel assemblage.

L'outil 50 selon l'invention est d'utilisation et de manipulation simple et rapide puisque l'opérateur n'a qu'à rentrer les caractéristiques de l'assemblage via l'interface homme machine 202 et effectuer une unique mesure. L'incidence des caractéristiques de l'assemblage (notamment la présence de rondelle) sur la mesure est traitée électroniquement et automatiquement, et l'outil 50 fournit une lecture simple de la qualité de l'assemblage.

Dans une variante de l'invention, non représentée sur les figures, le dispositif électronique 200 est une tablette tactile ou un téléphone intelligent du type de ceux disponibles dans le commerce où l'écran tactile de la tablette ou du téléphone combine les fonctions du dispositif d'affichage 201, de l'interface homme-machine 202. Un élément d'interface peut être utilisé pour faciliter les connections de la tablette tactile ou du téléphone intelligent au dispositif mécanique 100.

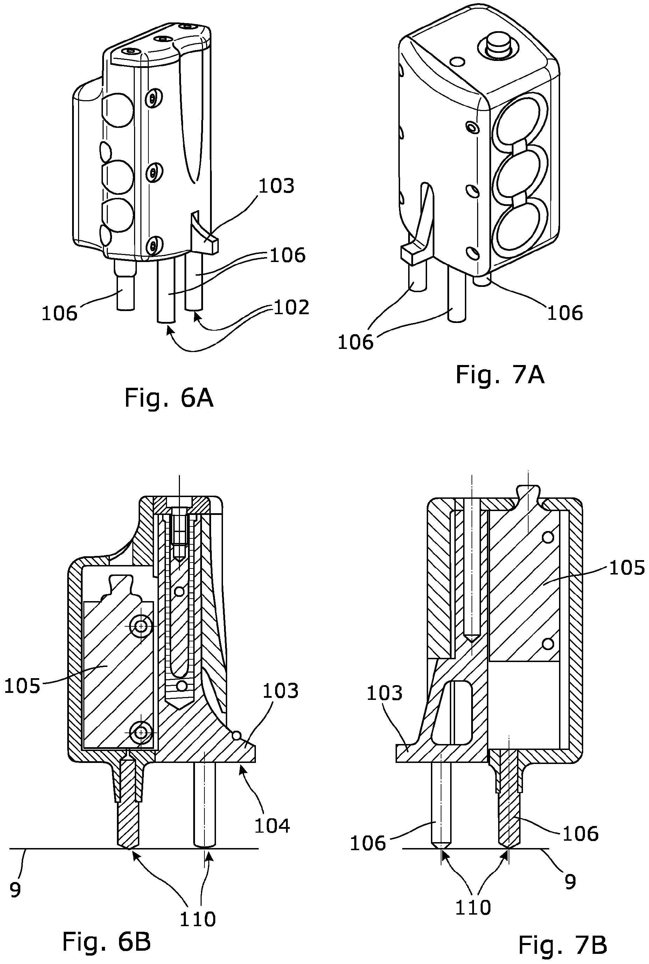

On notera que les figures 6A à 7B montrent d'autres modes de réalisation possibles du dispositif mécanique.

En particulier, dans les modes de réalisation illustrés sur ces quatre figures, le dispositif mécanique 100 comprend trois pieds 106 dont les extrémités inférieures constituent la surface d'appui 110 définissant le plan de référence P. Les trois pieds 106 sont dimensionnés et écartés de façon à ne pas interférer avec les assemblages voisins lors du contrôle d'un assemblage, et ce pour diverses zones de l'aéronef et divers types d'assemblage à contrôler,.

Les figures 6A et 6B illustrent un mode de réalisation de l'outil mécanique dont le capteur 107' du codeur linéaire est monté fixe à l'intérieur de l'outil. Les figures 7A et 7B illustrent un mode de réalisation de l'outil mécanique dont le codeur linéaire 105 est monté mobile à l'intérieur de l'outil 50 et comporte des moyens de rappel, du type ressorts, en position de repos du codeur. Dans les deux cas, la potence 103 et représentée en position haute.

## Revendications

1. Outil (50) de contrôle de la qualité d'assemblages d'éléments structuraux (2) d'un aéronef au moyen d'ensembles de fixation de type vis-écrou (1), l'outil comprenant un dispositif mécanique (100) et un dispositif électronique (200) connectés l'un à l'autre, le dispositif mécanique (100) comprenant :
- un boîtier (101) comportant une surface d'appui (110) définissant un plan de référence (P), ladite surface étant configurée pour, en utilisation, être plaquée sur une face, dite face de contact (9), d'un élément structurel (2) de l'assemblage à contrôler contre laquelle s'appuie l'écrou (7) vissé sur la vis (4) ;
- une potence (103) montée mobile en translation à l'intérieur du boîtier, ladite potence comportant une face inférieure (104) configurée, pour, en utilisation, être plaquée sur une extrémité libre (5) de la vis (4) ;
- un codeur linéaire (105) configuré pour mesurer, en utilisation, une distance entre le plan de référence (P) et la face inférieure (104) de la potence mobile (103),
le dispositif électronique (200) comprenant une unité centrale ayant une base de données, un écran d'affichage (201) et une interface homme-machine (202),
**caractérisé en ce que** la base de données comprend les caractéristiques de chacun de la pluralité des différents assemblages d'éléments structuraux (2) existants dans l'aéronef, les caractéristiques d'un assemblage (2) comprenant au moins les dimensions et références de la vis (4) et de l'écrou (7) de la fixation de type vis-écrou (1), l'épaisseur totale des éléments structuraux (2A, 2B) assemblés ainsi que les dimensions et références d'une rondelle intercalée entre la face de contact (9) et l'écrou (7) dans le cas où l'assemblage (2) en contient, une première et une seconde valeurs (D_{matage} , D_{écrou}) préconisées pour la combinaison vis-écrou de l'ensemble de fixation dans le cas où l'ensemble de fixation ne comprend pas de rondelle, une première et une seconde valeurs (D_{matage} , D_{écrou}) préconisées pour la combinaison vis-écrou de l'ensemble de fixation dans le cas où l'ensemble de fixation comprend une rondelle, et la première et la seconde valeurs délimitant, respectivement, une première et une seconde plage de validité auxquelles doit être comparée la mesure effectuée sur l'assemblage (2) au moyen du dispositif mécanique (100) pour contrôler la qualité dudit assemblage, et **en ce que** l'unité centrale est configurée, en utilisation, pour exécuter un programme de mise en œuvre d'une méthode de contrôle de la qualité d'un assemblage d'éléments structuraux (2) à partir de la mesure de la distance entre le plan de référence et la face inférieure (104) de la potence mobile, le programme faisant appel à la base de données.

2. Outil selon la revendication 1, **caractérisé en ce que** le dispositif électronique (200) est une tablette tactile ou un téléphone intelligent.

3. Outil selon l'une quelconque des revendications 1 à 2, **caractérisé en ce qu'**il comprend une coque (204) de réception et de protection du dispositif électronique (200), et des sangles (205) fixées à la coque (204) et configurés pour être placées autour d'un avant-bras d'un opérateur.

4. Outil selon l'une quelconque des revendications 1 à 3, **caractérisé en ce que** le dispositif mécanique (100) présente une face inférieure (102) plane constituant la surface d'appui (110) du dispositif mécanique (100).

5. Outil (50) selon l'une quelconque des revendications 1 à 3, **caractérisé en ce que** le dispositif mécanique (100) comporte trois pieds (106) ayant chacun une extrémité inférieure, les extrémités inférieures des trois pieds constituant la surface d'appui (110) du dispositif mécanique (100).

6. Méthode de contrôle de la qualité d'un assemblage d'éléments structuraux d'aéronefs au moyen d'un ensemble de fixation de type vis-écrou, ladite méthode étant mise en œuvre au moyen d'un outil (50) selon l'une quelconque des revendications 1 à 5, **caractérisé en ce qu'**il comprend les étapes successives suivantes :
- une étape d'identification (E1) dans laquelle un opérateur identifie l'assemblage d'éléments structuraux (2) qu'il veut contrôler et saisit, via l'interface homme-machine (202) des paramètres relatifs aux caractéristiques de l'assemblage ;
- une étape de détermination (E2), dans laquelle l'unité centrale détermine, en fonction des paramètres saisis par l'opérateur et des données de la base de données, deux valeurs (D_{matage}, D_{écrou}) liées à l'assemblage identifié à l'étape (E1) précédente ;
- une étape de positionnement (E3), dans laquelle l'opérateur place le dispositif mécanique (100) de sorte à enserrer l'écrou (7) de l'assemblage, avec la surface d'appui (110) du dispositif mécanique (100) plaquée contre la face de contact (9) et la surface plane (104) de la potence (103) plaquée contre l'extrémité libre (5) de lavis (4) ;
- une étape de mesure (E4), dans laquelle le codeur linéaire (105) mesure la distance entre la face inférieure (104) de la potence et le plan de référence (P) ;
- une première étape (E5) de comparaison, dans laquelle l'unité centrale compare la mesure avec une première plage de validité délimitée par une première valeur (D_{matage}) déterminée à l'étape de détermination (E2) ;
- une seconde étape (E6) de comparaison, dans laquelle l'unité centrale compare la mesure avec une seconde plage de validité délimitée par une seconde valeur (D_{écrou}) déterminée à l'étape de détermination (E2) ;
- une étape (E7) de détermination de la qualité de l'assemblage, dans laquelle l'unité centrale détermine que la qualité de l'assemblage est correcte si cumulativement la mesure est comprise dans la première plage de validité et dans la deuxième plage de validité ou au contraire que la qualité de l'assemblage est incorrecte si la mesure est en dehors d'au moins l'une des deux plages de validité.

7. Méthode selon la revendication 6, **caractérisée en ce que** l'unité centrale commande l'activation d'une alarme visuelle ou sonore lorsque la qualité de l'assemblage est incorrecte.

## Patentansprüche

1. Werkzeug (50) zur Kontrolle der Qualität von Verbindungen von Strukturelementen (2) eines Luftfahrzeugs mit Befestigungsanordnungen vom Typ Schraube-Mutter (1), wobei das Werkzeug eine mechanische Vorrichtung (100) und eine elektronische Vorrichtung (200) beinhaltet, die miteinander verbunden sind, wobei die mechanische Vorrichtung (100) Folgendes beinhaltet:
- ein Gehäuse (101), das eine Auflageoberfläche (110) umfasst, die eine Referenzebene (P) definiert, wobei die Oberfläche dazu konfiguriert ist, im Gebrauch auf eine Fläche, die als Kontaktfläche (9) bezeichnet wird, eines Strukturelements (2) der zu kontrollierenden Verbindung gedrückt zu werden, auf der die auf die Schraube (4) geschraubte Mutter (7) aufliegt;
- einen Ausleger (103), der innerhalb des Gehäuses verschiebbar montiert ist, wobei der Ausleger eine untere Fläche (104) umfasst, die dazu konfiguriert ist, im Gebrauch auf ein freies Ende (5) der Schraube (4) gedrückt zu werden;
- einen Lineargeber (105), der dazu konfiguriert ist, im Gebrauch einen Abstand zwischen der Referenzebene (P) und der unteren Fläche (104) des mobilen Auslegers (103) zu messen,
wobei die elektronische Vorrichtung (200) eine Zentraleinheit beinhaltet, die eine Datenbank, einen Anzeigebildschirm (201) und eine Mensch-Maschine-Schnittstelle (202) aufweist,
**dadurch gekennzeichnet, dass** die Datenbank die Eigenschaften jeder der Vielzahl von unterschiedlichen Verbindungen von Strukturelementen (2), die es in dem Luftfahrzeug gibt, beinhaltet, wobei die Eigenschaften einer Verbindung (2) mindestens Folgendes beinhalten: die Maße und Referenzen der Schraube (4) und der Mutter (7) der Befestigung vom Typ Schraube-Mutter (1), die Gesamtdicke der verbundenen Strukturelemente (2A, 2B) sowie die Maße und Referenzen einer zwischen der Kontaktfläche (9) und der Mutter (7) eingefügten Unterlegscheibe, falls die Verbindung (2) eine solche enthält, einen ersten und einen zweiten Wert (D_{Verstemmung}, D_{Mutter}), die für die Schraube-Mutter-Kombination der Befestigungsanordnung empfohlen werden, falls die Befestigungsanordnung keine Unterlegscheibe beinhaltet, einen ersten und einen zweiten Wert (D_{Verstemmung}, D_{Mutter}), die für die Schraube-Mutter-Kombination der Befestigungsanordnung empfohlen werden, falls die Befestigungsanordnung eine Unterlegscheibe beinhaltet, und wobei der erste und der zweite Wert jeweils einen ersten und einen zweiten Gültigkeitsbereich definieren, mit dem die Messung, die mit Hilfe der mechanischen Vorrichtung (100) zur Kontrolle der Qualität der Verbindung an der Verbindung (2) ausgeführt wird, zu vergleichen ist, und dass die Zentraleinheit dazu konfiguriert ist, im Gebrauch ein Programm zum Implementieren eines Verfahrens zur Kontrolle der Qualität einer Verbindung von Strukturelementen (2) mit Hilfe der Messung des Abstands zwischen der Referenzebene und der unteren Fläche (104) des mobilen Auslegers auszuführen, wobei das Programm auf die Datenbank zugreift.

2. Werkzeug nach Anspruch 1, **dadurch gekennzeichnet, dass** die elektronische Vorrichtung (200) ein Tablet oder ein Smartphone ist.

3. Werkzeug nach einem der Ansprüche 1 bis 2, **dadurch gekennzeichnet, dass** es eine Hülle (204) zum Aufnehmen und zum Schützen der elektronischen Vorrichtung (200) und an der Hülle (204) befestigte Bänder (205), die dazu konfiguriert sind, um einen Unterarm eines Bedieners gelegt zu werden, beinhaltet.

4. Werkzeug nach einem der Ansprüche 1 bis 3, **dadurch gekennzeichnet, dass** die mechanische Vorrichtung (100) eine ebene untere Fläche (102) aufweist, die die Auflagefläche (110) der mechanischen Vorrichtung (100) bildet.

5. Werkzeug (50) nach einem der Ansprüche 1 bis 3, **dadurch gekennzeichnet, dass** die mechanische Vorrichtung (100) drei Füße (106) umfasst, die jeweils ein unteres Ende aufweisen, wobei die unteren Enden der drei Füße die Auflagefläche (110) der mechanischen Vorrichtung (100) bilden.

6. Verfahren zur Kontrolle der Qualität einer Verbindung von Strukturelementen von Luftfahrzeugen mit einer Befestigungsanordnung vom Typ Schraube-Mutter, wobei das Verfahren durch ein Werkzeug (50) nach einem der Ansprüche 1 bis 5 implementiert wird, **dadurch gekennzeichnet, dass** es die folgenden aufeinander folgenden Schritte beinhaltet:
- einen Schritt des Identifizierens (E1), bei dem ein Bediener die Verbindung von Strukturelementen (2), die er kontrollieren möchte, identifiziert und über die Mensch-Maschine-Schnittstelle (202) Parameter bezüglich der Eigenschaften der Verbindung abruft;
- einen Schritt des Bestimmens (E2), bei dem die Zentraleinheit in Abhängigkeit von den durch den Bediener abgerufenen Parametern und den Daten der Datenbank zwei Werte (D_{Verstemmung}, D_{Mutter}), die mit der in dem vorhergehenden Schritt (E1) identifizierten Verbindung verbunden sind, bestimmt;
- einen Schritt des Positionierens (E3), bei dem der Bediener die mechanische Vorrichtung (100) platziert, um die Mutter (7) der Verbindung zu umschließen, wobei die Auflageoberfläche (110) der mechanischen Vorrichtung (100) gegen die Kontaktfläche (9) und die ebene Oberfläche (104) des Auslegers (103) gegen das freie Ende (5) der Schraube (4) gedrückt wird;
- einen Schritt des Messens (E4), bei dem der Lineargeber (105) den Abstand zwischen der unteren Fläche (104) des Auslegers und der Referenzebene (P) misst;
- einen ersten Schritt (E5) des Vergleichens, bei dem die Zentraleinheit die Messung mit einem ersten Gültigkeitsbereich, der durch einen ersten, während des Schritts des Bestimmens (E2) bestimmten Wert (D_{Verstemmung}) begrenzt wird, vergleicht;
- einen zweiten Schritt (E6) des Vergleichens, bei dem die Zentraleinheit die Messung mit einem zweiten Gültigkeitsbereich, der durch einen zweiten, während des Schritts des Bestimmens (E2) bestimmten Wert (D_{Mutter}) begrenzt wird, vergleicht;
- einen Schritt (E7) des Bestimmens der Qualität der Verbindung, bei dem die Zentraleinheit bestimmt, dass die Qualität der Verbindung in Ordnung ist, wenn die Messung sowohl in dem ersten Gültigkeitsbereich als auch in dem zweiten Gültigkeitsbereich liegt, oder dass im Gegenteil die Qualität der Verbindung nicht in Ordnung ist, wenn die Messung außerhalb mindestens eines der zwei Gültigkeitsbereiche liegt.

7. Verfahren nach Anspruch 6, **dadurch gekennzeichnet, dass** die Zentraleinheit die Aktivierung eines visuellen oder akustischen Alarms befiehlt, wenn die Qualität der Verbindung nicht in Ordnung ist.

## Claims

1. Tool (50) for checking the quality of assemblies of structural elements (2) of an aircraft by means of fixing sets of screw-nut type (1), the tool comprising a mechanical device (100) and an electronic device (200) that are connected to one another, the mechanical device (100) comprising:
- a housing (101) comprising a bearing surface (110) defining a reference plane (P), said surface being configured to, in use, be pressed on a face, called contact face (9), of a structural element (2) of the assembly to be checked against which the nut (7) screwed onto the screw (4) bears;
- a boom (103) mounted to be translationally mobile inside the housing, said boom comprising a bottom face (104) configured, to, in use, be pressed onto a free end (5) of the screw (4);
- a linear coder (105) configured to measure, in use, a distance between the reference plane (P) and the bottom face (104) of the mobile boom (103),
the electronic device (200) comprising a central unit having a database, a display screen (201) and a human-machine interface (202),
**characterized in that** the database comprises the characteristics of each of the plurality of the different assemblies of structural elements (2) existing in the aircraft, the characteristics of an assembly (2) comprising at least the dimensions and references of the screw (4) and of the nut (7) of the screw-nut (1) type fixing, the overall thickness of the assembled structural elements (2A, 2B) and the dimensions and references of a washer inserted between the contact face (9) and the nut (7) in the case where the assembly (2) contains same, a first and a second value (D_{mating}, Dₙᵤₜ) recommended for the screw-nut combination of the fixing set in the case where the fixing set does not include a washer, a first and a second value (D_{mating}, Dₙᵤₜ) recommended for the screw-nut combination of the fixing set in the case where the fixing set comprises a washer, and the first and second values delimiting, respectively, a first and a second validity range to which the measurement performed on the assembly (2) by means of the mechanical device (100) should be compared to check the quality of said assembly, and **in that** the central unit is configured, in use, to execute a program for implementing a method for checking the quality of an assembly of structural elements (2) from the measurement of the distance between the reference plane and the bottom face (104) of the mobile boom, the program invoking the database.

2. Tool according to Claim 1, **characterized in that** the electronic device (200) is a touch tablet or a smartphone.

3. Tool according to either one of Claims 1 and 2, **characterized in that** it comprises a shell (204) for receiving and protecting the electronic device (200), and straps (205) fixed to the shell (204) and configured to be placed around a forearm of an operator.

4. Tool according to any one of Claims 1 to 3, **characterized in that** the mechanical device (100) has a flat bottom face (102) constituting the bearing surface (110) of the mechanical device (100).

5. Tool (50) according to any one of Claims 1 to 3, **characterized in that** the mechanical device (100) comprises three feet (106) each having a bottom end, the bottom ends of the three feet constituting the bearing surface (110) of the mechanical device (100).

6. Method for checking the quality of an assembly of structural elements of aircraft by means of a fixing set of screw-nut type, said method being implemented by means of a tool (50) according to any one of Claims 1 to 5, **characterized in that** it comprises the following successive steps:
- an identification step (E1) in which an operator identifies the assembly of structural elements (2) that he or she wants to check and inputs, via the human-machine interface (202), parameters relating to the characteristics of the assembly;
- a determination step (E2), in which the central unit determines, as a function of the parameters input by the operator and of the data in the database, two values (D_{mating}, Dₙᵤₜ) linked to the assembly identified in the preceding step (E1);
- a positioning step (E3), in which the operator places the mechanical device (100) so as to grip the nut (7) of the assembly, with the bearing surface (110) of the mechanical device (100) pressed against the contact face (9) and the flat surface (104) of the boom (103) pressed against the free end (5) of the screw (4) ;
- a measurement step (E4), in which the linear coder (105) measures the distance between the bottom face (104) of the boom and the reference plane (P);
- a first comparison step (E5), in which the central unit compares the measurement with a first validity range delimited by a first value (D_{mating}) determined in the determination step (E2);
- a second comparison step (E6), in which the central unit compares the measurement with a second validity range delimited by a second value (Dₙᵤₜ) determined in the determination step (E2);
- a step (E7) of determination of the quality of the assembly, in which the central unit determines that the quality of the assembly is correct if, in aggregate, the measurement lies within the first validity range and within the second validity range or, on the other hand, that the quality of the assembly is incorrect if the measurement is outside of at least one of the two validity ranges.

7. Method according to Claim 6, **characterized in that** the central unit commands the activation of a visual or audible alarm when the quality of the assembly is incorrect.
